# EUROPÄISCHE PATENTSCHRIFT

(11) **EP 2 061 842 B1**
(45) Veröffentlichungstag und Bekanntmachung des Hinweises auf die Patenterteilung: **15.12.2010**
(21) Anmeldenummer: 07801980.9
(22) Anmeldetag: 29.08.2007
(51) Int. Cl.: C08L 91/06, B22F 3/16

(54) **MISCHUNG ZUR HERSTELLUNG VON GESINTERTEN FORMTEILEN UMFASSEND CARNAUBAWACHS**
MIXTURE FOR PRODUCING SINTERED MOULDINGS COMPRISING CARNAUBA WAX
MÉLANGE POUR LA FABRICATION DE PIÈCES MOULÉES FRITTÉES COMPRENANT DE LA CIRE DE CARNAUBA

(30) Priorität: 07.09.2006 DE 102006041944
(43) Veröffentlichungstag der Anmeldung: 27.05.2009
(73) Patentinhaber: GKN Sinter Metals Holding GmbH, 42477 Radevormwald (DE)
(72) Erfinder: Lindenau, René, 42477 Radevormwald (DE); Fax, Diego, 42477 Radevormwald (DE); Wimbert, Lars, 58332 Schwelm (DE)
(74) Vertreter: Maxton Langmaack & Partner
(86) Internationale Anmeldenummer: PCT/EP2007/007559
(87) Internationale Veröffentlichungsnummer: WO 2008/028589

(56) Entgegenhaltungen:
- EP-A- 0 436 952
- EP-A- 0 561 343
- DE-A1- 10 203 283

## Beschreibung

Die vorliegende Erfindung betrifft eine Mischung zur Herstellung von gesinterten Formteilen, umfassend mindestens ein metallisches Material und/oder Kunststoffmaterial und mindestens ein Presshilfsmittel, sowie ein Verfahren zur Herstellung einer solchen Mischung, deren Verwendung, ein entsprechendes Presshilfsmittel als auch einen aus der erfindungsgemäßen Mischung hergestellten Grünkörper.

Gesinterte Formteile finden vielfach Anwendung, insbesondere im Automobilbau, und dort insbesondere als Formteile im Motor als auch im Getriebe. Eine Schwierigkeit bei der Herstellung gesinterter Formteile besteht u.a. darin, diese mit einer möglichst hohen Dichte herzustellen. Ein durch ein übliches pulvermetallurgisches Verfahren aus einem sinterbaren Pulver ein- oder mehrschrittig gepresstes Formteil, allgemein als Grünkörper bezeichnet, wird dabei in einem zweiten Schritt unter Schutzatmosphäre gesintert, sodass sich ein festes und auch formgenaues Formteil ergibt.

Die Dichte solchermaßen erhaltener gesinterter Formteile hängt dabei wesentlich von der im ersten Pressschritt erzielten Dichte des Grünkörpers, der sog. Gründichte (auch Pressdichte genannt), ab. Daher ist es erstrebenswert, bereits nach dem ersten Pressschritt Grünkörper vorliegen zu haben, welche eine möglichst hohe Dichte aufweisen.

Die üblicherweise im Stand der Technik angewendeten hohen Pressdrücke zur Herstellung von Grünkörpern mit einer hohen Dichte haben jedoch einerseits einen hohen Verschleiß des Presswerkzeuges selbst zur Folge, und führen andererseits auch zu einer erhöhten Ausstoßgleitreibung des fertigen Grünkörpers in der Pressmatrize. Hierdurch sind höhere Ausstoßkräfte mit entsprechend erhöhtem Verschleiß auf das Presswerkzeug aufzubringen. Darüber hinaus bergen hohe Ausstoßkräfte die Gefahr einer unerwünschten lokalen Nachverdichtung und Rissbildung des Grünkörpers in sich.

Aus der DE 102 44 486 A1 ist ein Presshilfsmittel bekannt, welches 20 bis 60 Gew.-%, bezogen auf die Gesamtmenge des Presshilfsmittels, eines Polyglykols, und 40 bis 75 Gew.-%, bezogen auf die Gesamtmenge des Presshilfsmittels, eines Montanwachses umfasst. Hierdurch ist es möglich, bei Drücken von 800 MPa Grünkörper herzustellen, welche eine Pressdichte von mindestens 7,14 g/cm³ aufweisen.

Aufgabe der vorliegenden Erfindung ist es, eine Mischung zur Herstellung von gesinterten Formteilen zur Verfügung zu stellen, mittels welcher die vorgenannten Nachteile vermieden werden.

Diese Aufgabe wird gelöst durch eine Mischung zur Herstellung von gesinterten Formteilen, umfassend mindestens ein metallisches Material und/oder Kunststoffmaterial, und mindestens ein Presshilfsmittel, wobei das Presshilfsmittel etwa 0,5 Gew.-% bis etwa 60 Gew.-%, bezogen auf die Gesamtmenge des Presshilfsmittels, mindestens eines Amides, und etwa 40 Gew.-% bis etwa 99,5 Gew.-%, bezogen auf die Gesamtmenge des Presshilfsmittels, mindestens eines Carnaubawachses umfasst.

Als sinterbare Formteile im Sinne der vorliegenden Erfindung werden Formteile verstanden, welche vollständig aus einem sinterfähigen Material hergestellt wurden, andererseits werden hierunter auch Verbundteile verstanden, wobei der Grundkörper eines derartigen Verbundteils beispielsweise aus einer aluminium- oder eisenhaltigen Mischung hergestellt sein kann, und der mit dem Grundkörper weiter verbundene Körper aus einem weiteren Material, beispielsweise Gussstahl, gesintert oder massiv, oder aus massivem Aluguss hergestellt sein kann. Umgekehrt kann das Verbundteil auch beispielsweise lediglich auf den Stirnseiten oder seiner Oberfläche eine gesinterte Schicht aus einer beispielsweise aluminium- oder keramikhaltigen Mischung aufweisen, wohingegen der Grundkörper aus beispielsweise Stahl oder Gusseisen, gesintert oder massiv, hergestellt ist. Die gesinterten Formteile können dabei kalibriert und/oder ausgehärtet in der Wärme sein.

Metallische Materialien und/oder Kunststoffmaterialien im Sinne der vorliegenden Erfindung sind insbesondere Pulver bzw. Mischungen aus metallischen, keramischen und/oder Kunststoffbestandteilen, beispielsweise aus niedriglegierten Stählen, Chrom-Nickel-Stählen, Bronzen, Nickelbasislegierungen wie Hastallloy, Inconel, Metalloxiden, Metallnitriden, Metallsiliziden oder dergleichen, weiterhin aluminiumhaltige Pulver bzw. Mischungen, wobei die Mischungen auch hochschmelzende Bestandteile enthalten können wie beispielsweise Platin oder dergleichen. Das verwendete Pulver und seine Teilchengröße ist vom jeweiligen Einsatzzweck abhängig, wobei die Wahl dem angesprochenen Fachmann bekannt ist. Bevorzugte eisenhaltige Pulver sind die Legierungen 316L, 304L, Inconel 600, Inconel 625, Monel, Hastalloy B, X und C sowie Distaloy DH1. Dabei können selbstverständlich auch Mischungen der vorgenannten eisenhaltigen Pulver eingesetzt werden. Weiterhin kann das metallische Material und/oder Kunststoffmaterial ganz oder teilweise aus Kunstfasern bzw. Fasern sein, vorzugsweise Fasern mit Durchmessern zwischen etwa 0,1 bis etwa 2 µm und einer Länge von wenigen µm bis hin zu etwa 50 mm. Zusätzlich können dem metallischen Material und/oder Kunststoffmaterial auch insbesondere noch Kohlenstoff zur Bildung gewünschter Legierungen in entsprechender Menge zugesetzt werden.

Carnaubawachse im Sinne der vorliegenden Erfindung sind Pflanzenwachse, welche üblicherweise eine Dichte in einem Bereich von 0,990 bis 0,999 g/cm³ und einen Schmelzpunkt insbesondere in einem Bereich von etwa 83 bis etwa 86°C aufweisen. Carnaubawachse werden insbesondere aus den Blättern der brasilianischen Fächerpalme Copernicia prunifera (Carnaubapalme) gewonnen. Beispielhafte Carnaubawachse enthalten etwa 85 Gew.-% Ester von Wachssäuren, ω-Hydroxycarbonsäuren bzw. Zimtsäuren mit Wachsalkoholen und Diolen. Darüber hinaus enthalten Carnaubawachse auch etwa 3 bis etwa 5 Gew.-% freie Wachssäuren, insbesondere Carnauba- und Cerotinsäure, des Weiteren Alkohole und Diole, Kohlenwasserstoffe und Mineralstoffe. Es können auch Mischungen unterschiedlicher Carnaubawachse eingesetzt werden.

Bevorzugt weisen dabei die Carnaubawachse im Sinne der vorliegenden Erfindung eine lod-Zahl in einem Bereich von etwa 8,5 bis etwa 10,5 auf, des Weiteren liegt die Säurezahl der Carnaubawachse im Sinne der vorliegenden Erfindung bevorzugt in einem Bereich von etwa 1 bis etwa 4, und des Weiteren die Verseifungszahl in einem Bereich von etwa 70 bis etwa 83.

Amide im Sinne der vorliegenden Erfindung sind insbesondere ausgewählt aus einer Gruppe umfassend primäre, sekundäre und/oder tertiäre Amide. Weiter bevorzugt weisen die Amide im Sinne der vorliegenden Erfindung mindestens einen Alkyl-Rest mit 4 bis 22 Kohlenstoffatomen, bevorzugt 5 bis 21 Kohlenstoffatomen, auf. Besonders bevorzugt ist das Amid ein primäres Amid mit einem Alkyl-Rest mit 5 bis 21 Kohlenstoffatomen. Im Sinne der vorliegenden Erfindung können auch Mischungen unterschiedlicher Amide dem Presshilfsmittel zugesetzt werden, wobei die Mischungen vorzugsweise ausschließlich primäre Amine enthalten. In den Mischungen kann insbesondere die Kettenlänge des Alkyl-Restes in einem Bereich von 4 bis 22, bevorzugt 5 bis 21 Kohlenstoffatomen variieren.

Soweit in der vorliegenden Erfindung Bereiche oder Zahlenwerte angegeben werden, ist durch den Zusatz des Wortes "etwa" verdeutlicht, dass es sich bei den oberen und unteren Bereichsgrenzen nicht um absolute Werte handelt, es ist vielmehr für den angesprochenen Fachmann ersichtlich, dass der Erfolg der vorliegenden Erfindung auch bei Abweichungen von den zahlenmäßig definierten Ober- oder Untergrenzen noch erreicht werden kann. Dabei kann der abweichende Bereich um bis zu 5% von den angegebenen Ober- und/oder Untergrenzen differieren.

Die erfindungsgemäße Mischung weist den großen Vorteil auf, dass durch die Zugabe des definierten Presshilfsmittels sehr hohe Pressdichten erhalten werden, welche insbesondere bei Einsatz der Bestandteile Carnaubawachs und Amid alleine nicht zu erreichen sind, und auch diejenigen aus dem Stand der Technik bekannten Presshilfsmittel übertreffen. Hierdurch resultiert eine höhere Grünfestigkeit der aus der erfindungsgemäßen Mischung hergestellten Grünkörper. Zudem hat es sich gezeigt, dass mit der erfindungsgemäßen Mischung ein Warm- oder Kaltpressen zur Erzielung von Grünkörpern in einem Temperaturbereich ausgehend von Raumtemperatur (20°C) bis etwa 150°C durchgehend ermöglicht ist. Hierdurch ist eine sehr weite Anwendbarkeit der erfindungsgemäßen Mischung und des erfindungsgemäßen Presshilfsmittels ermöglicht, welche diejenige bekannter Presshilfsmittel, insbesondere auch des in der DE 102 44 486 A1 offenbarten, weit übersteigt.

Darüber hinaus weist die erfindungsgemäße Mischung den Vorteil auf, dass nach Pressung der Grünkörper erheblich geringere Ausstoßdrücke bei der Entnahme des Grünkörpers aus dem Presswerkzeug benötigt werden. Hier liegen die Ausstoßdrücke bei einer Temperatur von 65°C und einem Pressdruck von 700 MPa unterhalb von etwa 170 MPa. Des Weiteren können bei der Herstellung von Formteilen aus der erfindungsgemäßen Mischung von den Stempeln des eingesetzten Presswerkzeuges erheblich höhere Drücke ausgeübt werden als bei sonstigen aus dem Stand der Technik bekannten Presshilfsmitteln. So liegen die bei einer einseitigen Verdichtung, d.h. der Pressung der erfindungsgemäßen Mischung in einem Presswerkzeug mit einem Unterstempel einsetzbaren Unterstempeldrücke in einem Bereich von über 400 MPa.

Durch diese vorteilhaften Eigenschaften der erfindungsgemäßen Mischung wird einerseits der Verschleiß der verwendeten Presswerkzeuge erheblich herabgesetzt, andererseits ist die Gefahr von Rissbildungen oder aber lokalen Nachverdichtungen des hergestellten Grünkörpers gemindert. Des Weiteren liegen die mit der erfindungsgemäßen Mischung erzielbaren Pressdichten in Nähe derjenigen des endbearbeiteten und gesinterten Formteiles.

Die erfindungsgemäße Mischung kann auch weitere Bestandteile enthalten, insbesondere Schmiermittel, bevorzugt in einer Menge von etwa 0,2 bis etwa 5 Gew.-%, bezogen auf die Gesamtmenge der Mischung. Als Schmiermittel können dabei einerseits selbstschmierende Mittel vorgesehen sein wie beispielsweise MoS₂, WS₂, BN, Graphit und/oder andere Kohlenstoffmodifikationen wie Koks, polarisierter Graphit o.ä. Vorzugsweise werden dabei etwa 1 Gew.-% bis etwa 3 Gew.-% des Schmiermittels der sinterfähigen Mischung zugegeben. Durch Einsatz der vorgenannten Schmiermittel können den aus der sinterfähigen Mischung hergestellten Formteilen selbstschmierende Eigenschaften vor allem vermittelt werden.

Darüber hinaus kann die erfindungsgemäße Mischung weiterhin Kohlenstoff enthalten, bevorzugt in einer Menge in einem Bereich von mindestens 0,3 Gew.-%, weiter bevorzugt etwa 0,4 Gew.-% bis etwa 1,4 Gew.-%, maximal etwa 3 Gew.-%, bezogen auf die Gesamtmenge der Mischung, zur Bildung unterschiedlicher Legierungen aufweisen.

Die erfindungsgemäße Mischung kann weiterhin auch sonstige Presshilfsmittel oder Aerosile umfassen, aber auch sonstige, dem Fachmann bekannte Zusätze, je nach Anwendungszweck gewählt, sind möglich. Sie kann durch Mischen der einzelnen Bestandteile mit üblichen Apparaturen wie Taumelmischern sowohl in der Wärme (Warmmischen) als auch bei Raumtemperatur (Kaltmischen) hergestellt werden, wobei das Warmmischen, bevorzugt bei Temperaturen in einem Bereich von etwa 50 bis etwa 80°C, bevorzugt ist.

Besonders bevorzugt sind erfindungsgemäße Mischungen, welche etwa 50 Gew.-% bis etwa 75 Gew.-% mindestens eines Carnaubawachses und etwa 25 Gew.-% bis etwa 50 Gew.-% mindestens eines Amides aufweisen. Des Weiteren kann vorzugsweise noch mindestens ein weiteres Presshilfsmittel, ausgewählt aus der Gruppe der Fettsäuresalze, insbesondere der Stearate, weiter bevorzugt Zn-Stearate und/oder Si-Stearate, enthalten sein. Beispiele hierfür sind das Presshilfsmittel Kenolube P11, Höganäs AB, Schweden, welches eine Mischung eines Zn-Stearates und eines Amides darstellt, oder Caplube L des Herstellers H. L. Blachford Ltd., Missisanga, Kanada. Das mindestens eine weitere Presshilfsmittel kann in einer Menge, von bis zu etwa 25 Gew.-%, bezogen auf die Gesamtmenge des Presshilfsmittels, in diesem enthalten sein. Darüber hinaus enthalten die erfindungsgemäßen Mischungen bevorzugt keine weiteren Presshilfsmittel, insbesondere solche auf einer anderen chemischen Basis, was jedoch ausdrücklich nicht ausgeschlossen ist. Noch weiter bevorzugt weist die erfindungsgemäße Mischung als Presshilfsmittel etwa 0,3 Gew.-% bis etwa 0,9 Gew.-%, bezogen auf die Gesamtmenge der Mischung, einer Mischung aus etwa 25 bis etwa 50 Gew.-% eines Amides und etwa 50 bis etwa 75 Gew.-% mindestens eines Carnaubawachses, sowie gegebenenfalls etwa 0 bis 25 Gew.-% eines Zn-Stearates, jeweils bezogen auf die Gesamtmenge des Presshilfsmittels, auf und etwa 0,4 bis etwa 0,8 Gew.-% Kohlenstoff und
0,005 bis etwa 0,04 Gew.-% eines Aerosils, beide bezogen auf die Gesamtmenge der Mischung, wobei die Restmenge besonders bevorzugt von einem metallischen Material gebildet ist, wobei das metallische Material auch eine Mischung unterschiedlicher metallischer Materialien sein kann.

Die vorliegende Erfindung betrifft weiterhin ein Verfahren zur Herstellung der erfindungsgemäßen Mischung, wobei
- in einem ersten Schritt das von dem Presshilfsmittel umfasste mindestens eine Amid und mindestens eine Carnaubawachs zusammen geschmolzen werden; und
- in einem zweiten Schritt das gemäß dem ersten Schritt hergestellte Presshilfsmittel dem metallischen Material und/oder Kunststoffmaterial zugesetzt wird.

Weiter bevorzugt ist vorgesehen, dass nach dem ersten Schritt des erfindungsgemäßen Verfahrens die erhaltene und abgekühlte Schmelze gemahlen oder verdüst wird. Überraschenderweise hat sich gezeigt, dass bei dem erfindungsgemäßen Verfahren Pressdichten, sei es durch uniaxiales, biaxiales oder isostatisches Pressen, der mit der erfindungsgemäßen Mischung hergestellten Grünkörper erhalten werden, welche deutlich oberhalb denjenigen liegen, welche üblicherweise mit dem aus dem Stand der Technik bekannten Presshilfsmitteln erzielbar sind.

Alternativ ist ein Verfahren zur Herstellung der erfindungsgemäßen Mischung vorgesehen, gemäß welchem
- in einem ersten Schritt das vom Presshilfsmittel umfasste mindestens eine Amid und mindestens eine Carnaubawachs miteinander vermischt werden; und
- in einem zweiten Schritt das gemäß dem ersten Schritt hergestellte Presshilfsmittel dem metallischen Material und/oder Kunststoffmaterial zugesetzt wird.

Auch mittels dieses alternativen Verfahrens sind nach dem metallurgischen Pressvorgang erhaltene Grünkörper mit hohen Pressdichten und entsprechend auch hohen Grünfestigkeiten erzielbar, wobei bevorzugt das mindestens eine Amid und das mindestens eine Carnaubawachs pulverförmig eingesetzt werden, insbesondere mit einer Korngröße kleiner als etwa 500 µm.

Des Weiteren betrifft die vorliegende Erfindung die Verwendung der erfindungsgemäßen Mischung zur Herstellung von gesinterten Formteilen, als auch ein Presshilfsmittel, wie dieses in den Ansprüchen 1 bis 6 der vorliegenden Erfindung definiert ist. Besonders bevorzugt weist das Presshilfsmittel etwa 50 bis etwa 75 Gew.-% mindestens eines Carnaubawachses und etwa 25 bis etwa 50 Gew.-% eines Amides, bevorzugt eines primären Amides mit einem Alkyl-Rest mit 5 bis 21 Kohlenstoffatomen, bzw. Mischungen derartiger Amide, auf.

Schließlich betrifft die vorliegende Erfindung Grünkörper, hergestellt aus der erfindungsgemäßen Mischung, mit einer Pressdichte gemäß ISO 3927-1985 bei 700 MPa und 65°C von mindestens 7,15 g/cm³ auf.

Diese und weitere Vorteile der vorliegenden Erfindung werden anhand der folgenden Beispiele näher beschrieben.

Es wurden Mischungen a) bis d) hergestellt aus dem sinterbaren Metallpulver Distaloy DH1 der Firma Höganäs AB, Schweden mit 0,6 Gew.-% Kohlenstoff, 0,02 Gew.-% des Aerosils Aerosil^{®}200C Degussa AG, Düsseldorf, Deutschland sowie 0,6 Gew.-%, jeweils bezogen auf die Gesamtmenge der Mischung, der folgenden Presshilfsmittel:

| | |
|---|---|
| Mischung a) | Kenolube P11, Höganäs AB, Schweden, welches ein Gemisch aus 22,5 Gew.-% Zinksteareat und 77,5 Gew.-% eines Amidwaches darstellt; |
| Mischung b) | reinem Carnaubawachs mit der Produktbezeichnung Carnaubawachs Flakes F (technische Anwendung), Benecke GmbH, Hamburg, Deutschland; |
| Mischung c) | ein Fettsäureamidwachs mit einem Schmelzpunkt von 115°C mit der Produktbezeichnung LUBA-print Wachs 467/E des Herstellers L. B. Bader & Co. GmbH, Rottweil, Deutschland; und |
| Mischung d) | ein Gemisch aus 60 Gew.-% des Carnaubawachses gemäß Ziffer b) und 40 Gew.-% des Fettsäureamides gemäß c), wobei diese Mischung hergestellt wurde durch gemeinsames Schmelzens des Carnaubawachses und des Amidwachses, Erstarren der Schmelze mit ggf. nachfolgendem Kühlen und anschließendes Konfektionieren oder Fraktionieren derselben zu einem Pulver. |

Bevorzugt liegt der Anteil des zugesetzten Presshilfsmittels in der erfindungsgemäßen Mischung in einem Bereich von etwa 0,1 bis etwa 5 Gew.-%, bevorzugt etwa 0,1 bis etwa 3 Gew.-%, noch weiter bevorzugt etwa 0,1 bis etwa 1,5 Gew.-%, bezogen auf die Gesamtmenge der erfindungsgemäßen Mischung.

Die vorgenannten Mischungen wurden in ein übliches Presswerkzeug eingefüllt und bei einem Druck von 700 MPa und einer Temperatur von 65°C zu Zylindern mit einem Durchmesser von 14,3 mm und einer Länge von 14 mm uniaxial gepresst.

Dabei wurden für die vorstehend genannten vier Mischungen die Fließzeiten in Übereinstimmung mit DIN ISO 3923 (Ermittlung der Fülldichte Teil 1: Trichterverfahren), die Verpressbarkeit gemäß DIN ISO 3927 (Bestimmung der Verdichtbarkeit bei einachsigem Pressen), hier allerdings mit einem M/Q-Verhältnis (Mantelfläche zu Querschnitt-Verhältnis) der zu pressenden Teststücke von ca. 12 anstatt von einem Wert von M/Q von ca. 4, gemäß der Norm, sowie die Grün- bzw. Pressdichte der hergestellten Grünkörper in Übereinstimmung mit DIN ISO 3369 (undurchlässige Sintermetalle und Hartmetalle/Ermittlung der Dichte) bestimmt. Des Weiteren wurden Reibmessungen in einer einseitig arbeitenden Presse bei einer Temperatur von 65° C mit einem Unterstempel vorgenommen, wobei die Matrizenkräfte aufnehmbar und aus diesen die Werte für den Unterstempeldruck und den Ausstoßdruck ermittelbar sind. Das M/Q-Verhältnis betrug ca. 12, und es wurde ein Pressdruck von 700MPa verwendet. Die Ergebnisse der vorgenannten Messungen sind in den folgenden Figuren gezeigt:
- Fig. 1:: Fließzeiten der Mischungen a)- d);
- Fig. 2:: erzielbare Pressdichten mit den Mischungen gemäß a) - d); sowie
- Fig. 3:: Ergebnisse der Reibmessungen mit ermitteltem Unterstempeldruck (schwarz) und Ausstoßdruck (hell) der Mischungen a) - d).

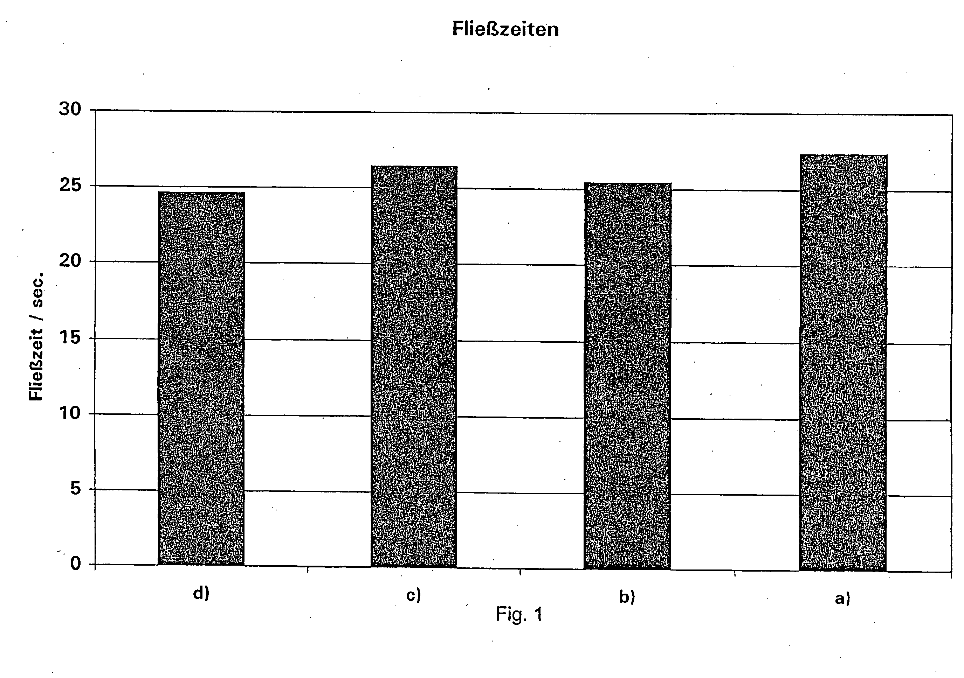

Fig. 1 ist zu entnehmen, dass die Fließzeiten der verschiedenen Mischungen a) - d) in einem relativ ähnlichen Bereich liegen.

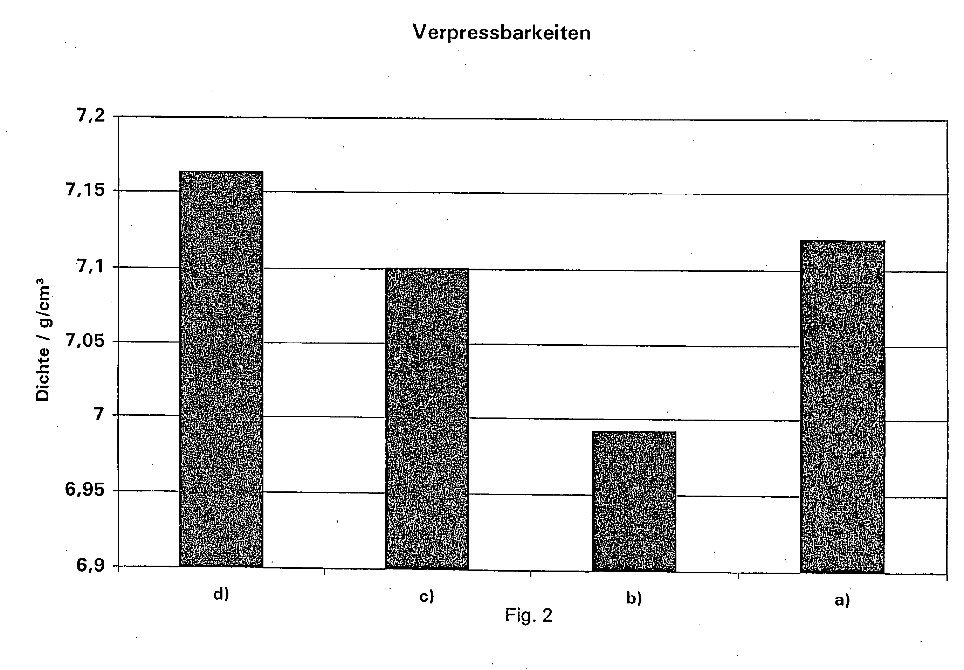

Fig. 2 zeigt, dass die mit der erfindungsgemäßen Mischung d) erzielbare Pressdichte erheblich über derjenigen der Mischung a) liegt, und insbesondere auch deutlich oberhalb derjenigen der Mischung b) als auch der Mischung c) liegt, welche einzelne Bestandteile des Presshilfsmittels gemäß Mischung d) aufweisen. Hier zeigt sich ein überraschender synergistischer Effekt, welcher durch eine Mischung der Presshilfsmittel gemäß der Mischungen b) und c) erhalten werden kann.

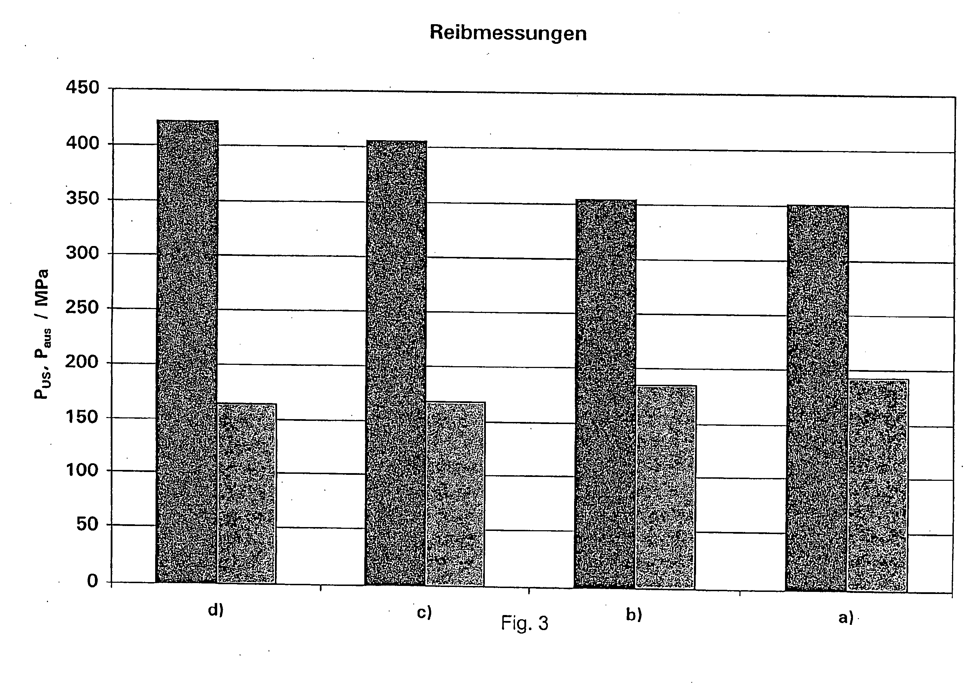

Die in Fig. 3 wiedergegebenen Reibmessungen zeigen, dass vorteilhafterweise der Unterstempeldruck pᵤₛ bei der erfindungsgemäßen Mischung d) deutlich oberhalb derjenigen der sonstigen Mischungen gemäß a) bis c) liegt, andererseits der Ausstoßdruck pₐᵤₛ niedriger als bei den anderen Mischungen a) bis c) ist. Somit kommt unter Einsatz der erfindungsgemäßen Mischung d) im Verdichtungsschnitt auch ein höherer Druck effektiv im Presswerkzeug an, andererseits ist die Ausstoßgleitreibung mit der erfindungsgemäßen Mischung d) erniedrigt, was sich an dem geringeren Ausstoßdruck pₐᵤₛ des mittels der Mischung d) hergestellten Grünkörpers im Vergleich zu den Mischungen a) bis c) zeigt.

Durch die vorliegende Erfindung wird somit eine Mischung zur Verfügung gestellt, welche die weit verbreiteten Nachteile bekannter Mischungen in einer einzigen Mischung vermindert, nämlich einerseits ist es ermöglicht, mit der erfindungsgemäßen Mischung hohe Grünfestigkeiten in den aus dieser erhaltenen Grünkörpern bei hohen Grün- bzw. Pressdichten derselben zu erzielen, andererseits können die Ausstoßkräfte aus dem Presswerkzeug erheblich vermindert werden, wodurch sich dessen Lebensdauer erhöht. Die aus den erfindungsgemäßen Mischungen hergestellten Grünkörper weisen eine hervorragende Qualität auf, wobei durch die verminderte Rissbildung und die Verminderung der Bildung lokaler Nachverdichtungsstellen eine qualitativ gleiche und hochwertige Produktion gesinterter Formteile sichergestellt ist.

## Patentansprüche

1. Mischung zur Herstellung von gesinterten Formteilen, umfassend mindestens ein metallisches Material und/oder Kunststoffmaterial und mindestens ein Presshilfsmittel, wobei das Presshilfsmittel etwa 0,5 bis etwa 60 Gew.-%, bezogen auf die Gesamtmenge des Presshilfsmittels, mindestens eines Amides, und etwa 40 bis etwa 99,5 Gew.-%. bezogen auf die Gesamtmenge des Presshilfsmittels, mindestens eines Carnaubawachses umfasst.

2. Mischung gemäß Anspruch 1, **dadurch gekennzeichnet, dass** das Amid ausgewählt ist aus einer Gruppe umfassend primäre, sekundäre und tertiäre Amide.

3. Mischung gemäß einem der vorhergehenden Ansprüche, **dadurch gekennzeichnet, dass** das Amid mindestens einen Alkyl-Rest mit 4 bis 22 Kohlenstoffatomen aufweist.

4. Mischung gemäß einem der vorhergehenden Ansprüche, **dadurch gekennzeichnet, dass** das Amid ein primäres Amid mit einem Alkyl-Rest mit 5 bis 21 Kohlenstoffatomen ist.

5. Mischung gemäß einem der vorhergehenden Ansprüche, **dadurch gekennzeichnet, dass** das Carnaubawachs eine lod-Zahl von etwa 8,5 bis etwa 10,5 aufweist.

6. Mischung gemäß einem der vorhergehenden Ansprüche, **dadurch gekennzeichnet, dass** das Presshilfsmittel in dieser in einer Menge in einem Bereich von etwa 0,1 Gew.-% bis etwa 5 Gew.-%, bezogen auf die Gesamtmenge der Mischung, vorliegt.

7. Verfahren zur Herstellung einer Mischung gemäß einem der Ansprüche 1 bis 6, wobei
- in einem ersten Schritt das vom Presshilfsmittel umfasste mindestens eine Amid und mindestens eine Carnaubawachs zusammen geschmolzen werden; und
- in einem zweiten Schritt das gemäß dem ersten Schritt hergestellte Presshilfsmittel dem metallischen Material und/oder Kunststoffmaterial zugesetzt wird.

8. Verfahren gemäß Anspruch 7, **dadurch gekennzeichnet, dass** nach dem ersten Schritt die Schmelze aus Amid und Carnaubawachs gemahlen und/oder verdüst wird.

9. Verfahren zur Herstellung einer Mischung gemäß einem der Ansprüche 1 bis 6, wobei
- in einem ersten Schritt das vom Presshilfsmittel umfasste mindestens eine Amid und mindestens eine Carnaubawachs miteinander vermischt werden; und
- in einem zweiten Schritt das gemäß dem ersten Schritt hergestellte Presshilfsmittel dem metallischen Material und/oder Kunststoffmaterial zugesetzt wird.

10. Verwendung einer Mischung gemäß einem der Ansprüche 1 bis 6 zur Herstellung von gesinterten Formteilen.

11. Presshilfsmittel zur Herstellung von gesinterten Form zur Herstellung von gesinterten Formteilen, umfassend etwa 0,5 bis etwa 60 Gew.-%, bezogen auf die Gesamtmenge des Presshilfsmittels, mindestens eines Amides, und etwa 40 bis 99,5 Gew.-%, bezogen auf die Gesamtmenge des Presshilfsmittels, mindestens eines Carnaubawaches.

12. Presshilfsmittel gemäß Anspruch 11, **dadurch gekennzeichnet, dass** das Amid ausgewählt ist aus einer Gruppe umfassend primäre, sekundäre und tertiäre Amide.

13. Presshilfsmittel gemäß einem der Ansprüche 11 oder 12, **dadurch gekennzeichnet, dass** das Amid mindestens einen Alkyl-Rest mit 4 bis 22 Kohlenstoffatomen aufweist.

14. Presshilfsmittel gemäß einem der Ansprüche 11 bis 13, **dadurch gekennzeichnet, dass** das Amid ein primäres Amid mit einem Alkyl-Rest mit 5 bis 21 Kohlenstoffatomen ist.

15. Presshilfsmittel gemäß einem der Ansprüche 11 bis 14, **dadurch gekennzeichnet, dass** das Carnaubawachs eine lodzahl von etwa 8,5 bis etwa 10,5 aufweist.

16. Grünkörper, hergestellt aus einer Mischung gemäß einem der Ansprüche 1 bis 6, **dadurch gekennzeichnet, dass** dieser eine Pressdichte gemäß ISO 3927-1985 bei 700 MPA bei 65°C von mindestens 7,15 g/cm³ aufweist.

## Claims

1. A mixture for producing sintered mouldings, comprising at least one metallic material and/or plastic material and at least one pressing aid, wherein the pressing aid comprises from about 0.5 % to about 60 % by weight, based on the total amount of the pressing aid, of at least one amide, and from about 40 % to about 99.5 % by weight, based on the total amount of the pressing aid, of at least one carnauba wax.

2. The mixture according to claim 1, **characterized in that** the amide is selected from a group comprising primary, secondary, and tertiary amides.

3. The mixture according to any of the preceding claims, **characterized in that** the amide has at least one alkyl residue with 4 to 22 carbon atoms.

4. The mixture according to any of the preceding claims, **characterized in that** the amide is a primary amide with an alkyl residue with 5 to 21 carbon atoms.

5. The mixture according to any of the preceding claims, **characterized in that** the carnauba wax has a iodine number from about 8.5 to about 10.5.

6. The mixture according to any of the preceding claims, **characterized in that** the amount of the pressing aid comprised therein is in a range from about 0.1 % by weight to about 5 % by weight, based on the total amount of the mixture.

7. A method for producing a mixture according to any of claims 1 to 6, wherein
- in a first step, the at least one amide and the at least one carnauba wax comprised in the pressing aid are melted together, and
- in a second step, the pressing aid produced in the first step is added to the metallic material and/or plastic material.

8. The method according to claim 7, **characterized in that**, after the first step, the melt of amide and carnauba wax is milled and/or atomized.

9. A method for producing a mixture according to any of claims 1 to 6, wherein
- in a first step, the at least one amide and the at least one carnauba wax comprised in the pressing aid are mixed, and
- in a second step, the pressing aid produced in the first step is added to the metallic material and/or plastic material.

10. Use of a mixture according to any of claims 1 to 6 for producing sintered mouldings.

11. A pressing aid for producing sintered mouldings comprising from about 0.5 % to about 60 % by weight, based on the total amount of the pressing aid, of at least one amide, and from about 40 % to about 99.5 % by weight, based on the total amount of the pressing aid, of at least one carnauba wax.

12. The pressing aid according to claim 11, **characterized in that** the amide is selected from a group comprising primary, secondary, and tertiary amides.

13. The pressing aid according any of claims 11 or 12, **characterized in that** the amide has at least one alkyl residue with 4 to 22 carbon atoms.

14. The pressing aid according to any of claims 11 to 13, **characterized in that** the amide is a primary amide with an alkyl residue with 5 to 21 carbon atoms.

15. The pressing aid according to any of claims 11 to 14, **characterized in that** the carnauba wax has a iodine number from about 8.5 to about 10.5.

16. A green compact produced from a mixture according to any of claims 1 to 6, **characterized in that** it has a pressed density, according to ISO 3927-1985, of at least 7.15 g/cm³ at 700 MPa at 65°C.

## Revendications

1. Mélange pour la fabrication de pièces moulées frittées, comprenant au moins un matériau métallique et/ou un matériau synthétique et au moins un auxiliaire de pressage, l'auxiliaire de pressage comprenant environ 0,5 à 60 % en poids, rapportés à la quantité totale de l'auxiliaire de pressage, d'au moins un amide, et environ 40 à 99,5 % en poids, rapportés à la quantité totale de l'auxiliaire de pressage, d'au moins une cire de carnauba.

2. Mélange selon la revendication 1, **caractérisé en ce que** l'amide est choisi parmi un groupe comprenant des amides primaires, secondaires et tertiaires.

3. Mélange selon l'une quelconque des revendications précédentes, **caractérisé en ce que** l'amide comporte au moins un radical alkyle avec 4 à 22 atomes de carbone.

4. Mélange selon l'une quelconque des revendications précédentes, **caractérisé en ce que** l'amide est un amide primaire avec un radical alkyle avec 5 à 21 atomes de carbone.

5. Mélange selon l'une quelconque des revendications précédentes, **caractérisé en ce que** la cire de carnauba présente un indice d'iode d'environ 8,5 à environ 10,5.

6. Mélange selon l'une quelconque des revendications précédentes, **caractérisé en ce que** l'auxiliaire de pressage y est présent en une quantité dans un intervalle d'environ 0,1 % en poids à environ 5 % en poids, rapportée à la quantité totale du mélange.

7. Procédé pour la préparation d'un mélange selon l'une quelconque des revendications 1 à 6, dans lequel
- dans une première étape, ledit au moins un amide et ladite au moins une cire de carnauba que comprend l'auxiliaire de pressage sont fondus ensemble ; et
- dans une deuxième étape, l'auxiliaire de pressage préparé conformément à la première étape est ajouté au matériau métallique et/ou au matériau synthétique.

8. Procédé selon la revendication 7, **caractérisé en ce qu'**après la première étape, la matière fondue consistant en l'amide et la cire de carnauba est broyée et/ou pulvérisée.

9. Procédé pour la préparation d'un mélange selon l'une quelconque des revendications 1 à 6, dans lequel
- dans une première étape, ledit au moins un amide et ladite au moins une cire de carnauba que comprend l'auxiliaire de pressage sont mélangés ensemble ; et
- dans une deuxième étape, l'auxiliaire de pressage préparé conformément à la première étape est ajouté au matériau métallique et/ou au matériau synthétique.

10. Utilisation d'un mélange selon l'une quelconque des revendications 1 à 6 à la fabrication de pièces moulées frittées.

11. Auxiliaire de pressage pour la fabrication de moules frittés pour la fabrication de pièces moulées frittées, comprenant environ 0,5 à 60 % en poids, rapportés à la quantité totale de l'auxiliaire de pressage, d'au moins un amide, et environ 40 à 99,5 % en poids, rapportés à la quantité totale de l'auxiliaire de pressage, d'au moins une cire de carnauba.

12. Auxiliaire de pressage selon la revendication 11, **caractérisé en ce que** l'amide est choisi parmi un groupe comprenant des amides primaires, secondaires et tertiaires.

13. Auxiliaire de pressage selon l'une quelconque des revendications 11 ou 12, **caractérisé en ce que** l'amide comporte au moins un radical alkyle avec 4 à 22 atomes de carbone.

14. Auxiliaire de pressage selon l'une quelconque des revendications 11 à 13, **caractérisé en ce que** l'amide est un amide primaire avec un radical alkyle avec 5 à 21 atomes de carbone.

15. Auxiliaire de pressage selon l'une quelconque des revendications 11 à 14, **caractérisé en ce que** la cire de carnauba présente un indice d'iode d'environ 8,5 à environ 10,5.

16. Corps cru, fabriqué en un mélange selon l'une quelconque des revendications 1 à 6, **caractérisé en ce que** ce dernier présente une densité à l'état pressé selon ISO 3927-1985 sous 700 MPa à 65°C d'au moins 7,15 g/cm³.
